# EUROPÄISCHE PATENTANMELDUNG

(11) **EP 4 745 058 A1**
(43) Veröffentlichungstag der Anmeldung: **20.05.2026**
(21) Anmeldenummer: 25208607.9
(22) Anmeldetag: 14.10.2025
(51) Int. Cl.: B65G 21/20, B65G 43/02

(54) **VORRICHTUNG ZUM UMGANG MIT ARTIKELN UND VERFAHREN ZUM BETRIEB EINER SOLCHEN VORRICHTUNG**

(30) Priorität: 14.11.2024 DE 102024133416
(71) Anmelder: Krones Aktiengesellschaft, 93073 Neutraubling (DE)
(72) Erfinder: KIRZINGER, Johannes, 93073 Neutraubling (DE); OBERHOLZNER, Dominik, 93073 Neutraubling (DE)
(74) Vertreter: Benninger, Johannes

(57) **Zusammenfassung**

Es sind eine Vorrichtung zum Umgang mit Artikeln (2), insbesondere Getränke- und/oder Behälterbehandlungsanlage, mit mindestens einem verstellbaren Element (3, 4), welches mit einer digitalen Positionserfassungseinheit (300) ausgestattet ist, und ein Verfahren zum Betrieb einer solchen Vorrichtung offenbart. Die Vorrichtung oder die mindestens eine Positionserfassungseinheit (300) sind frei von einer Displayanzeige. Das Verfahren sieht vor, dass zur Anpassung der Vorrichtung an den Umgang mit von bisherigen Artikeln (2) verschiedenen Artikeln (2) über ein Netzwerk ein bevorzugt mobiles Gerät mit der Vorrichtung gekoppelt und dessen Anzeige zur Ausgabe zumindest von bei einem Artikelwechsel vorzunehmender Einstellungen des mindestens einen verstellbaren Elements (3, 4) genutzt wird.

## Beschreibung

Die vorliegende Erfindung betrifft eine Vorrichtung zum Umgang mit Artikeln gemäß den Merkmalen des Oberbegriffs des unabhängigen Vorrichtungsanspruchs und ein Verfahren zum Betrieb einer solchen Vorrichtung gemäß den Merkmalen des Oberbegriffs des unabhängigen Verfahrensanspruchs.

Insbesondere betrifft die vorliegende Erfindung eine Vorrichtung zum Umgang mit Artikeln, welche Vorrichtung durch Vornahme einer Änderung einer oder mehrerer Einstellungen mindestens eines verstellbaren Elements der Vorrichtung an den Umgang mit verschiedenen Artikeln anpassbar ist, und ein Verfahren zum Betrieb einer solchen Vorrichtung, insbesondere ein Verfahren zur Anpassung einer solchen Vorrichtung an den Umgang mit verschiedenen Artikeln. Eine Anpassung von einem Umgang mit einem alten Artikel an einen Umgang mit einem neuen Artikel erfolgt durch Vornahme einer kurz als Einstellungsänderung bezeichneten Änderung mindestens einer Einstellung mindestens eines verstellbaren Elements. Bei den verschiedenen Artikeln kann es sich beispielsweise um Artikel verschiedener Abmessungen und/oder verschiedenen vorgegebenen Umgangs handeln.

Durch DE 10 2008 010 076 A1 ist eine in Fig. 1 dargestellte Vorrichtung zum Umgang mit Artikeln 2 bekannt. Dort werden Artikel 2 entlang einer Transportstrecke 1 in Pfeilrichtung A durch die Vorrichtung transportiert. Entlang der Transportstrecke 1 sind zwei in Doppelpfeilrichtungen B artikelabhängig verstellbare Elemente 3, 4 angeordnet. Jedes der Elemente 3, 4 ist hierzu mit mehreren Verstellvorrichtungen 5, 5a versehen, die über Verstellglieder 6, 6a auf die Einstellpositionen der verstellbaren Elemente 3, 4 einwirken. Betätigungseinrichtungen 7, 7a erlauben eine Einstellung der Verstellglieder 6, 6a. Jede Betätigungseinrichtung verfügt über eine Displayanzeige 10. Die Vorrichtung umfasst eine zentrale Steuereinheit 11 mit einem Speichermedium, in dem artikelabhängig vorgegebene Einstellpositionen des verstellbaren Elements für unterschiedliche Artikel 2 als Sollwerte abgelegt und für eine Einstellung oder Umstellung der Vorrichtung zum Umgang mit einem beispielsweise anderen Artikel 2 bereitgehalten sind. Ein mobiler, motorischer Antrieb 9 ist an die Vorrichtung ankuppelbar, um bei einem Artikelwechsel die verstellbaren Elemente 3, 4 unter Rückgriff auf die Sollwerte an die neuen Artikel 2 anzupassen. Hierzu sind mit den motorischen Antrieben 7, 7a kompatible Kupplungen 8 an den Verstellvorrichtungen 5, 5a vorgesehen. Die Vorrichtung verfügt über Mittel, welche die Istpositionen der verstellbaren Elemente 3, 4 erfassen. Die den Verstellvorrichtungen 5, 5a zugeordneten Istpositionen können auf der jeweiligen Displayanzeige 10 der entsprechenden Verstellvorrichtung 5, 5a der Vorrichtung anzeigbar sein. Die zentrale Steuereinheit 11 kann über einen Bildschirm 12 verfügen, auf dem die artikelabhängig vorzunehmenden Einstellungen der verstellbaren Elemente 3, 4 angezeigt werden. Eine Eingabetastatur 13 ergänzt die zentrale Steuereinheit 11. Ferner können die Displayanzeigen 10 ein bei einem Artikelwechsel zu verstellendes verstellbares Element 3, 4 sowie gegebenenfalls dessen artikelabhängige Verstellung anzeigen.

Ein Nachteil des Standes der Technik ist neben einer kostensteigernden Anordnung von Displayanzeigen zumindest an jeder Vorrichtung zum Umgang mit Artikeln, die ein in Wechselwirkung mit zumindest einem Teil der Artikel bringbares verstellbares Element aufweisen, oder gar an jedem verstellbaren Element, eine Beeinträchtigung der Arbeitsschutzbedingungen, sei es aufgrund einer durch eine an der Vorrichtung angeordneten Displayanzeige verursachte Verdeckung von Teilen der Vorrichtung oder durch eine potentielle Unfall- und Gefahrenquelle beim Umgang mit der Vorrichtung, beispielsweise indem ein Bediener beispielsweise mit einem Kleidungsstück an der Displayanzeige der Vorrichtung hängen bleibt.

Eine Aufgabe der Erfindung ist es, hierfür Abhilfe zu schaffen.

Die Aufgabe wird durch die Merkmale des unabhängigen Vorrichtungsanspruchs sowie alternativ oder zusätzlich durch die Merkmale des unabhängigen Verfahrensanspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die vorgeschlagene Vorrichtung löst die der Erfindung zu Grunde liegende Aufgabe, indem die kurz auch als Verstelleinheiten bezeichneten verstellbaren Elemente über keine eigene Displayanzeige mehr verfügen, sondern eine die Displayanzeige ersetzende Darstellung beispielsweise an einem mobilen Gerät angezeigt wird. Die oben genannte Aufgabe wird somit dadurch erfüllt, dass eine Abhilfe für die unerwünschten Displayanzeigen an der Vorrichtung geschaffen wird, indem diese Displayanzeigen ersetzt und die auf ihnen dargestellten Informationen an eine andere Darstellung ausgelagert werden, die bspw. durch ein mobiles Gerät zur Verfügung gestellt werden kann. Die oben identifizierten Nachteile der mehreren oder vielen Displayanzeigen an unterschiedlichen Stellen der Vorrichtung können somit effektiv beseitigt werden.

Ein erster Gegenstand der Erfindung betrifft demnach eine Vorrichtung zum Umgang mit Artikeln, insbesondere eine Getränke- und/oder Behälterbehandlungsanlage, die über mindestens ein verstellbares Element verfügt, welches mit einer digitalen Positionserfassungseinheit ausgestattet ist. Die Vorrichtung zeichnet sich dadurch aus, dass sie und/oder die mindestens eine digitale Positionserfassungseinheit frei von einer Displayanzeige ist. Gleichwohl liefert die vorhandene digitale Positionserfassungseinheit aus den erfassten Positionsdaten Ausgangssignale, die aber nicht direkt zur Anzeige gebracht, sondern an eine andere Stelle übermittelt werden, um bspw. mittels eines ggf. entfernt angeordneten mobilen Gerätes aufbereitet und/oder grafisch und/oder numerisch abgebildet zu werden.

Die hier allgemein als Artikel bezeichneten Stückgüter, die in der Vorrichtung verarbeitet, gehandhabt, transportiert und/oder anderweitig behandelt werden, können beispielsweise Getränkebehälter, Zusammenstellungen aus Getränkebehältern, Preforms oder weitere Verpackungen- oder Verpackungsmaterialien sein.

Die von der Positionserfassungseinheit bspw. generierten Messwerte können anstelle auf eine lokale Displayanzeige auf ein Gerät, insbesondere ein mobiles Gerät, übertragen werden.

Ein Aufruf der die Displayanzeige ersetzenden Darstellung kann beispielsweise über ein mobiles Gerät erfolgen, oder alternativ oder zusätzlich durch Scannen eines Codes, beispielsweise eines QR-Codes beispielsweise an entsprechender Stelle an der Vorrichtung, beispielsweise nahe des verstellbaren Elements oder zumindest in Bezug zum verstellbaren Element. Hierdurch ist auch auf einem nicht speziell einer Vorrichtung zugeordnetem mobilen Gerät eine die Displayanzeige ersetzende Darstellung unter eindeutiger Zuordnung zum jeweiligen verstellbaren Element und der entsprechenden Vorrichtung zum Umgang mit Artikeln sichergestellt.

Ein mobiles Gerät kann beispielsweise ein Telekommunikations-Endgerät, ein sog. Tablet, eine Smartwatch, ein sog. Notebook oder ein anderes mobiles Endgerät sein, das sich für den genannten Zweck eignet.

Sich durch die Verwirklichung der Erfindung unmittelbar ergebende Vorteile sind u.a. eine Kosteneinsparung, weil auf eine Displayanzeige an der Vorrichtung und insbesondere auf mehrere Displayanzeigen an der Vorrichtung verzichtet werden kann.

Besonders hervorzuheben ist die vorteilhafte Schaffung einer grafischen Visualisierung der vorzunehmenden Ver- und Umstellungen eines oder mehrerer verstellbarer Elemente einer Vorrichtung zum Umgang mit Artikeln bei einem Artikelwechsel. Dadurch wird ein Umstellassistent geschaffen, der beispielsweise auf einem mobilen Gerät dargestellt wird und beispielsweise Schritt für Schritt zeigt, welche Ein- und Verstellungen in welcher Reihenfolge an welchem oder welchen verstellbaren Elementen vorgenommen werden müssen.

Ein solcher Umstellassistent ist besonders bei einer manuellen Vornahme der Einund Verstellungen verstellbarer Elemente vorteilhaft. Gleichzeitig wird eine einfache und zuverlässige Protokolliermöglichkeit der vorgenommenen Änderungen geschaffen. Die Protokollierung ist dabei unabhängig von einem Umstellassistenten verwirklichbar, beispielsweise durch Quittierung auf einem mobilen Gerät. Dies kann sowohl unter Einbeziehung eines Umstellassistenten als auch ohne einen solchen erfolgen.

Sind mehrere verstellbare Elemente betroffen, so muss ein Bediener bisher selbst Sorge tragen, welches verstellbare Element er bei einem Artikelwechsel wann und in welcher Reihenfolge in welche Einstellung bringt.

Sich durch eine derartige Verwirklichung der Erfindung mittelbar ergebende Vorteile sind Kosteneinsparungen durch Verkürzung und Vereinfachung der Umrüstzeiten bei Artikelwechseln. Kollisionen von in räumlicher Abhängigkeit angeordneten verstellbaren Elementen können durch diese vorteilhafte Ausgestaltung der Erfindung vermieden werden. Dies ist von besonderer Relevanz bei verstellbaren Elementen, die beispielsweise in einer vorgegebenen Reihenfolge verstellt werden müssen um überhaupt eine Verstellung durchführen zu können. Durch die Erfindung können zeitraubende, irrtümliche Hin- und Herverstellungen bei mehreren in vorgegebener Reihenfolge zu verstellender verstellbarer Elemente vermieden werden. Dies ist von besonderer Bedeutung, wenn sich die Reihenfolge je nach Verstellrichtung entsprechend je nach Wechsel von welchem vorhergehenden Artikel auf welchen neuen Artikel verändert. Ein solcher Quell irrtümlicher Hin- und Herverstellungen versiegt durch eine anleitende grafischen Visualisierung der vorzunehmenden Ver- und Umstellungen eines oder mehrerer verstellbarer Elemente einer Vorrichtung zum Umgang mit Artikeln bei einem Artikelwechsel auf einem ständig einem Bediener zur Verfügung stehenden mobilen Gerät.

Ein zweiter Gegenstand der Erfindung betrifft ein Verfahren zum Betrieb einer voranstehend beschriebenen Vorrichtung zum Umgang mit Artikeln.

Insbesondere betrifft der zweite Gegenstand der Erfindung ein Verfahren zur Anpassung einer voranstehend beschriebenen Vorrichtung zum Umgang mit Artikeln an den Umgang mit verschiedenen Artikeln.

Bei der Vorrichtung zum Umgang mit Artikeln, zu deren Betrieb beziehungsweise zu deren Anpassung an den Umgang mit verschiedenen Artikeln, bei der das Verfahren vorgesehen ist, handelt es sich insbesondere um eine Getränke- und/oder Behälterbehandlungsanlage, mit mindestens einem verstellbaren Element, welches mit einer digitalen Positionserfassungseinheit ausgestattet ist.

Das Verfahren zeichnet sich dadurch aus, dass beispielsweise Messwerte der mindestens einen Positionserfassungseinheit auf ein Gerät, insbesondere ein mobiles Gerät, übertragen werden. Auf dem vorrichtungsunabhängigen Gerät können bei einem Artikelwechsel vorzunehmende Verstellvorgänge und/oder -hinweise ausgegeben werden.

Vorteilhafterweise können aber auch nur Messwerte von der mindestens einen Positionserfassungseinrichtung auf ein Gerät übertragen werden, ohne Verstellvorgänge vorzunehmen; dies kann insbesondere für Analysezwecke genutzt werden.

Es ist ersichtlich, dass die Erfindung zumindest zum Teil verwirklicht sein kann durch eine digitale Verstellanzeige für mindestens ein an einer Vorrichtung zum Umgang mit Artikeln angeordnetes, verstellbares Element, welches eine Wechselwirkung mit den Artikeln ausübt, welche digitale Verstellanzeige frei von einer Displayanzeige an der das verstellbare Element aufweisenden Vorrichtung zum Umgang mit Artikeln ist.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, die erfindungsgemäße Vorrichtung zum Umgang mit Artikeln mit mindestens einem verstellbaren Element ausgestattet sein, wobei die Vorrichtung gemäß der Definition der vorliegenden Erfindung frei von Displayanzeigen sein soll, die den verstellbaren Elementen zugeordnet wären. Vorzugsweise ist eine erfindungsgemäße Vorrichtung zum Umgang mit Artikeln mit mindestens einem verstellbaren Element frei von jeglicher Displayanzeige. Zudem ist es bevorzugt, dass die erfindungsgemäße Vorrichtung zum Umgang mit Artikeln mit mindestens einem verstellbaren Element zumindest frei von einer vorrichtungsgebundenen Displayanzeige ist.

Wie oben bereits erläutert wurde, übt das mindestens eine verstellbare Element eine Wechselwirkung mit den Artikeln aus, mit denen vermittels der Vorrichtung umgegangen werden kann. Das oder die verstellbaren Elemente sind vorteilhaft artikelabhängig verstellbar. Dadurch kann die Vorrichtung von einem Umgang mit einem bisherigen Artikel auf einen Umgang mit einem neuen Artikel umgestellt werden. Insbesondere handelt es sich bei der Vorrichtung um eine Getränke- und/oder Behälterbehandlungsanlage.

Die Vorrichtung zum Umgang mit Artikeln kann insbesondere mit einer Transportstrecke ausgestattet sein, entlang der mit den transportierten Artikeln umgegangen wird. Mindestens ein verstellbares Element kann entlang der Transportstrecke angeordnet sein. Bei dem oder den verstellbaren Elementen kann es sich insbesondere um Einrichtungen handeln, welche mit den Artikeln während deren Transports zusammenwirken, indem die Artikel mit den Elementen in Kontakt kommen und aufgrund der Transportbewegung während dieser einen von der Transportbewegung verschiedenen und/oder abweichenden Umgang, insbesondere eine Verschiebung, Verdrehung, Verkippung erfahren.

Das mindestens eine verstellbare Element der Vorrichtung ist mit einer digitalen Positionserfassungseinheit ausgestattet. Die Positionserfassungseinheit kann über einen oder mehrere kurz auch als Positionssensoren zu bezeichnende Sensoren zur Positionserfassung eines verstellbaren Elements oder eines Teils eines verstellbaren Elements verfügen und weist vorteilhaft mindestens ein eindeutig einer momentanen Position oder momentanen Einstellung des verstellbaren Elements zuordbares und in Abhängigkeit von der momentanen Position oder momentanen Einstellung veränderliches digitales Ausgangssignal auf.

Vorteilhaft verfügt die Vorrichtung über jeweils mindestens eine mit einem verstellbaren Element zusammenwirkende und bei Betätigung dessen Verstellung bewirkende Verstelleinrichtung. Dabei kann es sich um eine manuelle Verstelleinrichtung handeln. Mittels der manuellen Verstelleinrichtung kann ein verstellbares Element der Vorrichtung zum Umgang mit Artikeln handbetätigbar verstellt und/oder eingestellt werden. Gegebenenfals müssen mehr als eine manuelle Verstelleinrichtung betätigt werden, um ein verstellbares Element an den Umgang mit einem neuen Artikel anzupassen. Die manuelle Verstelleinrichtung kann eine Handkurbel und/oder einen Klemmhebel umfassen.

Besonders bevorzugt ist zumindest die Positionserfassungseinheit des mindestens einen verstellbaren Elements der Vorrichtung zum Umgang mit Artikeln frei von einer Anzeige, insbesondere Displayanzeige, insbesondere von einer Bildschirmdarstellung von bei einem Artikelwechsel vorzunehmender Verstellvorgänge und/oder -hinweise. Die Vorrichtung zum Umgang mit Artikeln kann auch mehrere digitale Positionserfassungseinheiten aufweisen, beispielsweise sofern sie über mehr als ein verstellbares Element verfügt. Vorzugsweise ist gar keine Anzeige an der Vorrichtung vorgesehen. Hiernach ist die Vorrichtung frei von jeglicher Anzeige, insbesondere Visualisierung in Zusammenhang mit vorzunehmenden Verstellvorgängen. Hiernach ist die erfindungsgemäße Vorrichtung oder die mindestens eine digitale Positionserfassungseinheit frei von einer Displayanzeige.

Die Vorrichtung weist vorteilhaft eine Datenschnittstelle zu einem Gerät, vorzugsweise einem mobilen Gerät, beispielsweise einem mobilen Telekommunikations-Endgerät, mit einer Anzeige, vorzugsweise einer Bildschirmdarstellung auf. Eine solche Anzeige kann beispielsweise Reihenfolge und Verstellweg insbesondere einer manuell vorzunehmenden Verstellung für mindestens ein verstellbares Element angeben.

Die Vorrichtung ist hiernach insbesondere frei von einer vorrichtungsgebundenen Displayanzeige. Vorteilhaft schließt dies jedoch vorrichtungsungebundene Anzeigen, insbesondere Bildschirmdarstellungen vorzugsweise auf einem mobilen Gerät nicht aus.

Die Datenschnittstelle kann Teil eines beispielsweise drahtlosen Netzwerks sein. Ein solches kann vorrichtungsspezifisch, anlagenspezifisch, standortspezifisch oder firmenweit sein.

Das verstellbare Element beziehungsweise ein durch Verstellung desselben vorzunehmender Verstellvorgang kann bspw.:
- eine Gassenbreitenverstellung, und/oder
- eine Transportspurenpositionsverstellung, und/oder
- eine Schrumpftunnelschachtwandverstellung, und/oder
- eine Lufttransportbreitenverstellung
umfassen oder hiervon umfasst sein beziehungsweise Teil einer solchen sein.

Das verstellbare Element kann ganz oder teilweise:
- ein Gassenblech, und/oder
- eine Schrumpftunnelschachtwand, und/oder
- eine Schließkette eines Verpackungsmoduls, und/oder
- eine Spur einer Gebindevorfaltung, und/oder
- ein Geländer zum Karton-Falten, und/oder
- einen Preformzulauf in eine Blasmaschine
umfassen.

Vorteilhaft ist die das verstellbare Element umfassende Vorrichtung Teil einer Verpackungsmaschine. Beispielsweise kann die Vorrichtung insbesondere im Zulauf einer Verpackungsmaschine angeordnet sein.

Generell kann die Vorrichtung Teil einer Getränke- und/oder Behälterbehandlungsanlage sein. Sie kann an mehreren Positionen innerhalb einer entsprechenden Anlage verwirklicht sein, überall dort, wo eine artikelabhängige Verstellung vorgenommen werden muss. Dies kann auch Stationen innerhalb einer solchen Anlage umfassen, bei denen ein gleichzeitiger Umgang mit mehren, beispielsweise gruppierten Artikeln stattfindet.

Beispielsweise kann die Vorrichtung zum Umgang mit Artikeln mit mindestens einem verstellbaren Element eine Gruppierstation und/oder einen Greiferkopf umfassen. Beispielsweise kann eine Transportstrecke der Vorrichtung zum Umgang mit Artikeln mit mindestens einem verstellbaren Element eine Gruppierstation und/oder einen Greiferkopf umfassen. Beispielsweise kann das verstellbare Element eine Greiftulpe oder eine Gruppe von Greiftulpen eines Greiferkopfs umfassen.

Eine vorteilhafte Ausgestaltung der Erfindung sieht vor, dass gegebenenfalls für noch zu verstellende verstellbare Elemente kennzeichnende Leuchtanzeigen vorgesehen sind.

Die erwähnte Positionserfassungseinheit kann einen oder mehrere kurz auch als Positionssensoren bezeichenbare Sensoren zur Positionserfassung eines verstellbaren Elements oder eines Teils eines verstellbaren Elements umfassen. Alternativ kann die Positionserfassungseinheit mit den erwähnten Positionssensoren eines oder mehrerer verstellbarer Elemente verbunden oder zumindest verbindbar sein, beispielsweise durch Einrichtung und/oder Beitritt und/oder Öffnen eines Netzwerks, wie etwa eines drahtlosen Netzwerks. Über ein Datenkabel kann die Positionserfassungseinheit bspw. mit der Vorrichtung, insbesondere mit einer Steuereinrichtung, wie etwa einer SPS, beispielsweise einem Steuergerät der Vorrichtung und/oder der Station und/oder der Anlage und/oder der Produktionsstätte zum Zweck des Zugriffs beispielsweise auf zu erwartende neue Artikel und/oder der Werte von in der Vorrichtung verbauter Positionssensoren verbunden sein. Ein Stromkabel dient der Stromversorgung der Positionserfassungseinheit.

Auf der Positionserfassungseinheit kann ein maschinenlesbarer Code angeordnet sein, der beispielhaft durch einen QR-Code gebildet sein kann. Alternativ oder zusätzlich kann ein alphanumerischer Code beispielsweise in Form einer Anlagennummer, Stationsnummer, o. dgl. auf der Positionserfassungseinheit angeordnet sein. Der numerische Code beispielsweise dient einer genauen Identifizierung der Positionserfassungseinheit sowie damit einhergehend eines Standorts eines Bedieners an der Vorrichtung, beispielsweise wenn dieser Code vom Bediener erkannt werden kann und für diesen sichtbar ist. Es sei darauf hingewiesen, dass solche Codes wahlweise auch an anderer Stelle der Vorrichtung angeordnet sein können, d.h. nicht unbedingt auf oder an der Positionserfassungseinheit angeordnet sein müssen.

Die Positionserfassungseinheit kann mindestens ein eindeutig einer momentanen Position oder momentanen Einstellung eines oder mehrerer verstellbaren Elemente zuordbares und in Abhängigkeit von der momentanen Position oder momentanen Einstellung veränderliches digitales Ausgangssignal generieren oder ist zumindest in der Lage, ein solches bereitzustellen.

Eine voranstehend bereits und nachfolgend noch beschriebene Vorrichtung zum Umgang mit Artikeln, insbesondere einer Getränke- und/oder Behälterbehandlungsanlage, mit mindestens einem verstellbaren Element welches mit einer digitalen Positionserfassungseinheit ausgestattet ist, und welche vorteilhaft frei von einer Displayanzeige ausgeführt sein kann, erlaubt die Durchführung eines Verfahrens zum Betrieb einer solchen Vorrichtung, welches Verfahren sich dadurch auszeichnet, dass zur Anpassung der Vorrichtung an den Umgang mit von bisherigen Artikeln verschiedenen Artikeln ein Gerät, insbesondere ein mobiles Gerät über ein bevorzugt zumindest teilweise drahtloses Netzwerk mit der Vorrichtung gekoppelt und dessen Anzeige zur Ausgabe zumindest von bei einem Artikelwechsel vorzunehmender Einstellungen des mindestens einen verstellbaren Elements genutzt wird.

Das Verfahren kann beispielsweise vorsehen, dass beispielsweise Messwerte der mindestens einen Positionserfassungseinheit auf ein Gerät, insbesondere ein mobiles Gerät, besonders bevorzugt drahtlos übertragen werden. Auf dem vorrichtungsunabhängigen Gerät können bei einem Artikelwechsel vorzunehmende Verstellvorgänge und/oder -hinweise betreffend das mindestens eine verstellbare Element ausgegeben werden.

Mit anderen Worten kann durch das Verfahren gestützt durch Vornahme einer kurz als Einstellungsänderung bezeichneten Änderung mindestens einer Einstellung mindestens eines verstellbaren Elements eine Anpassung der Vorrichtung von einem Umgang mit alten Artikeln an einen Umgang mit neuen Artikel erfolgen.

Das Verfahren kann eine Verbindung insbesondere eines mobilen Geräts mit einem die Vorrichtung, zumindest jedoch die digitale Positionserfassungseinheit des mindestens einen verstellbaren Elements umfassenden Netzwerk durch Eingabe eines Codes, beispielsweise eines maschinenlesbaren Codes vorsehen, woraufhin das mobile Gerät beispielsweise bei einem Artikelwechsel vorzunehmende Verstellungen des verstellbaren Elements angibt, beispielsweise anzeigt.

Vorteilhafte Ausgestaltungen eines solchen Verfahrens können das nachfolgend Beschriebene ganz oder teilweise umfassen. Die Vorrichtung zum Umgang mit Artikeln mit mindestens einem verstellbaren Element weist vorteilhaft eine Datenschnittstelle zu einem Gerät, vorzugsweise einem mobilen Gerät mit einer Anzeige, vorzugsweise einer Bildschirmdarstellung auf. Dabei kann es sich beispielsweise um ein mobiles Telekommunikations-Endgerät handeln.

Durch Eingabe, vorteilhaft durch scannen des maschinenlesbaren Codes beispielsweise mittels des mobilen Geräts, kann auf dem mobilen Gerät eine auch als Umstellassistent bezeichenbare Bildschirmdarstellung aufgerufen werden. Hierbei kann zunächst eine Startbildschirmanzeige in Erscheinung treten. Vorteilhaft tritt das mobile Gerät durch Eingabe des maschinenlesbaren Codes beispielsweise zeitgleich mit der Darstellung der Startbildschirmanzeige einem vorteilhaft zugleich die erwähnte Datenschnittstelle bereitstellenden Netzwerk bei. Dabei kann es sich eigens um ein von der Positionserfassungseinheit ausgehendes drahtloses Netzwerk handeln. Grundsätzlich ist durch Eingabe des maschinenlesbaren Codes der Beitritt zu einem anderen vorgegebenen Netzwerk, beispielsweise einem produktionsstättenweiten Netzwerk denkbar.

Die Startbildschirmanzeige kann eine beispielsweise schematische, grafische Darstellung eines Teils der Vorrichtung zum Umgang mit Artikeln, insbesondere eine grafische Darstellung eines mindestens ein verstellbares Element umfassenden Teils der Vorrichtung zum Umgang mit Artikeln zeigen. Vorteilhaft handelt es sich bei der grafischen Darstellung um eine perspektivische Darstellung in einer Ansicht aus Sicht des Bedieners gesehen, wenn dieser auf den die Anordnung des maschinenlesbaren Codes und vorteilhaft auch des alphanumerischen Codes, beispielsweise die Positionserfassungseinheit umfassenden Teil der Vorrichtung blickt. Außerdem kann der alphanumerische Code auf der Startbildschirmanzeige, beispielsweise innerhalb der grafischen Darstellung angezeigt sein. Dadurch kann ein Bediener, der sich des mobilen Geräts bedient, die jeweilige Positionserfassungseinheit verifizieren und damit auch seinen Standort in Bezug auf die Vorrichtung eindeutig identifizieren.

Die grafische Darstellung innerhalb der Startbildschirmanzeige kann die manuelle Auswahl eines von mehreren verstellbaren Elementen erlauben oder eine Auswahl vorgeben. Die manuelle Auswahl eines verstellbaren Elements kann durch antippen beispielsweise eines die grafische Darstellung zeigenden, berührungsempfindlichen Bildschirms des mobilen Geräts erfolgen. Die Vorgabe einer Auswahl kann durch farbliche oder optische Hervorhebung, beispielsweise durch eine animierte Vergrößerungsdarstellung einhergehend mit einer Bestätigung durch den Benutzer, beispielsweise durch antippen beispielsweise eines die grafische Darstellung zeigenden, berührungsempfindlichen Bildschirms des mobilen Geräts erfolgen.

Zum ausgewählten verstellbaren Element kann darüber hinaus ein genau dem einen ausgewählten verstellbaren Element zugeordneter alphanumerischer Code auf der Startbildschirmanzeige wiedergegeben sein. Durch das Treffen einer Auswahl des entsprechenden verstellbaren Elements mit dem diesem zugeordneten alphanumerischen Code in der grafischen Darstellung wechselt die Bildschirmdarstellung von der Startbildschirmanzeige bspw. zu einer Einstellungsbildschirmanzeige des auf dem mobilen Gerät aufrufbaren Umstellassistenten für das dem alphanumerischen Code zugeordnete verstellbare Element der Vorrichtung zum Umgang mit Artikeln beziehungsweise für einen dem alphanumerischen Code zugeordneten Teil eines verstellbaren Elements der Vorrichtung zum Umgang mit Artikeln.

Dieser alphanumerischen Code kann in der Einstellungsbildschirmanzeige beispielsweise hervorgehoben dargestellt sein, um dem Bediener die Verifikation des von der der vorzunehmenden Einstellung betroffenen verstellbaren Elements beziehungsweise des von der der vorzunehmenden Einstellung betroffenen Teils eines verstellbaren Elements zu erlauben.

Die Einstellungsbildschirmanzeige kann vorteilhafterweise eine Verifizierungsanzeige einer korrekten Auswahl des ausgewählten verstellbaren Elements oder eines Teils desselben umfassen. Die Verifizierungsanzeige kann beispielsweise farbig leuchten, wenn das ausgewählte verstellbare Element an der Reihe ist oder sein kann, nunmehr verstellt zu werden. Die Verifizierungsanzeige kann bspw. mit anderer Farbe leuchten, wenn das ausgewählte verstellbare Element nicht an der Reihe ist oder sein kann, nunmehr verstellt zu werden, beispielsweise weil zuvor noch andere verstellbare Elemente verstellt werden müssen. Die Verifizierungsanzeige kann wiederum in anderer Farbe leuchten, wenn das ausgewählte verstellbare Element korrekt eingestellt ist und nicht verstellt werden muss.

Die Einstellungsbildschirmanzeige kann eine Anzeige von der Positionserfassungseinheit bereitgestellter IST-Werte der momentanen Position des ausgewählten verstellbaren Elements oder eines Teils desselben umfassen. Die Einstellungsbildschirmanzeige kann eine Anzeige von der Positionserfassungseinheit bereitgestellter SOLL-Werte der momentanen Position des ausgewählten verstellbaren Elements oder eines Teils des selben umfassen. Die Einstellungsbildschirmanzeige kann bspw. eine Bestätigungsschaltfläche umfassen, die beispielsweise zu Zwecken einer Protokollierung beispielsweise durch antippen betätigt werden muss, um einen artikelabhängigen Ein- oder Verstellvorgang eines verstellbaren Elements oder eines Teils eines verstellbaren Elements abzuschließen.

Eine bevorzugte Anwendung findet die Erfindung in Verbindung mit einem so genannten Packer, bei dem mehrere beispielsweise gleichartige Artikel beispielsweise:
- zu palettierbaren Artikellagen gruppiert,
- mit oder ohne eine Umverpackung zu Gebinden zusammengestellt,
- zur einzelnen oder gruppenweisen Einsortierung in Kästen angeordnet und/oder ausgerichtet
werden, sowie auch ganz allgemein in der Getränketechnik.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Vorrichtung zum Umgang mit Artikeln mit entlang einer Transportstrecke angeordneten verstellbaren Elementen nach dem Stand der Technik.
Fig. 2 zeigt schematische Ansicht einer Positionserfassungseinheit für ein verstellbares Element einer erfindungsgemäßen Vorrichtung zum Umgang mit Artikeln in einer Draufsicht.
Fig. 3 zeigt eine schematische Ansicht einer Startbildschirmanzeige eines auf einem mobilen Gerät aufrufbaren Umstellassistenten für ein verstellbares Element einer erfindungsgemäßen Vorrichtung zum Umgang mit Artikeln in einer Draufsicht.
Fig. 4 zeigt eine schematische Ansicht einer durch Auswahl auf der Startbildschirmanzeige aus Fig. 2 erreichbaren Einstellungsbildschirmanzeige des auf einem mobilen Gerät aufrufbaren Umstellassistenten für ein verstellbares Element einer erfindungsgemäßen Vorrichtung zum Umgang mit Artikeln in einer Draufsicht.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein können und stellen keine abschließende Begrenzung dar.

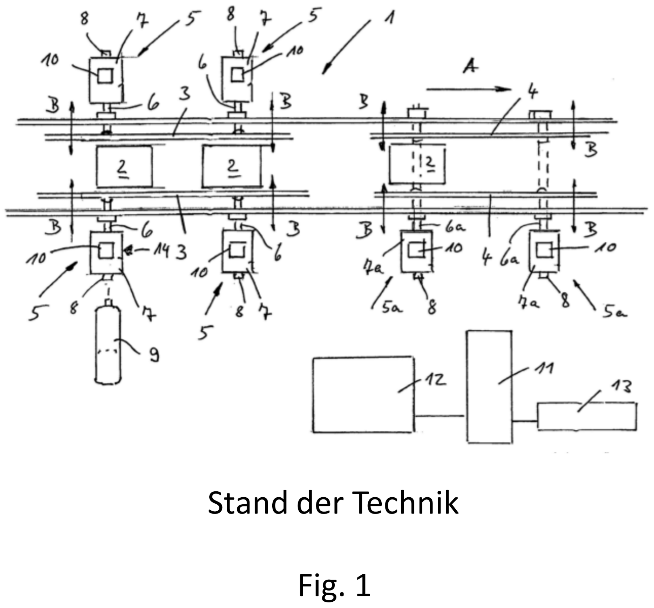

Eine erfindungsgemäße Vorrichtung zum Umgang mit Artikeln mit mindestens einem verstellbaren Element, ist im Gegensatz zu einer in Fig. 1 beispielhaft dargestellten Vorrichtung zum Umgang mit Artikeln 2 nach dem Stand der Technik 3, 4 frei von verstellbaren Elementen zugeordneten Displayanzeigen.

Vorzugsweise ist eine erfindungsgemäße Vorrichtung zum Umgang mit Artikeln mit mindestens einem verstellbaren Element frei von jeglicher Displayanzeige.

Bevorzugt ist eine erfindungsgemäße Vorrichtung zum Umgang mit Artikeln mit mindestens einem verstellbaren Element zumindest frei von einer vorrichtungsgebundenen Displayanzeige.

Das mindestens eine verstellbare Element übt eine Wechselwirkung mit den Artikeln aus, mit denen vermittels der Vorrichtung umgegangen werden kann.

Das oder die verstellbaren Elemente sind vorteilhaft artikelabhängig verstellbar. Dadurch kann die Vorrichtung von einem Umgang mit einem bisherigen Artikel auf einen Umgang mit einem neuen Artikel umgestellt werden.

Insbesondere handelt es sich bei der Vorrichtung um eine Getränke- und/oder Behälterbehandlungsanlage.

Die Vorrichtung zum Umgang mit Artikeln kann mit einer Transportstrecke ausgestattet sein, entlang der mit Artikeln umgegangen wird. Mindestens ein verstellbares Element kann entlang der Transportstrecke angeordnet sein. Bei dem oder den verstellbaren Elementen kann es sich insbesondere um Einrichtungen handeln, welche mit den Artikeln während deren Transports zusammenwirken, indem die Artikel mit den Elementen in Kontakt kommen und aufgrund der Transportbewegung während dieser einen von der Transportbewegung verschiedenen / abweichenden Umgang, insbesondere eine Verschiebung, Verdrehung, Verkippung erfahren.

Das mindestens eine verstellbare Element der Vorrichtung ist mit einer digitalen Positionserfassungseinheit ausgestattet. Die Positionserfassungseinheit kann über einen oder mehrere kurz auch als Positionssensoren bezeichenbare Sensoren zur Positionserfassung eines verstellbaren Elements oder eines Teils eines verstellbaren Elements verfügen und weist vorteilhaft mindestens ein eindeutig einer momentanen Position oder momentanen Einstellung des verstellbaren Elements zuordbares und in Abhängigkeit von der momentanen Position oder momentanen Einstellung veränderliches digitales Ausgangssignal auf.

Vorteilhaft verfügt die Vorrichtung über jeweils mindestens eine mit einem verstellbaren Element zusammenwirkende und bei Betätigung dessen Verstellung bewirkende Verstelleinrichtung. Dabei kann es sich um eine manuelle Verstelleinrichtung handeln. Mittels der manuellen Verstelleinrichtung kann ein verstellbares Element der Vorrichtung zum Umgang mit Artikeln handbetätigbar verstellt und/oder eingestellt werden. Gegebenenfals müssen mehr als eine manuelle Verstelleinrichtung betätigt werden, um ein verstellbares Element an den Umgang mit einem neuen Artikel anzupassen.

Die manuelle Verstelleinrichtung kann eine Handkurbel und/oder einen Klemmhebel umfassen.

Besonders bevorzugt ist zumindest die Positionserfassungseinheit des mindestens einen verstellbaren Elements der Vorrichtung zum Umgang mit Artikeln frei von einer Anzeige, insbesondere Displayanzeige, insbesondere von einer Bildschirmdarstellung von bei einem Artikelwechsel vorzunehmender Verstellvorgänge und/oder -hinweise.

Die Vorrichtung zum Umgang mit Artikeln kann auch mehrere digitale Positionserfassungseinheiten aufweisen, beispielsweise sofern sie über mehr als ein verstellbares Element verfügt.

Vorzugsweise ist gar keine Anzeige an der Vorrichtung vorgesehen. Hiernach ist die Vorrichtung frei von jeglicher Anzeige, insbesondere Visualisierung in Zusammenhang mit vorzunehmenden Verstellvorgängen.

Hiernach ist die erfindungsgemäße Vorrichtung oder die mindestens eine digitale Positionserfassungseinheit frei von einer Displayanzeige.

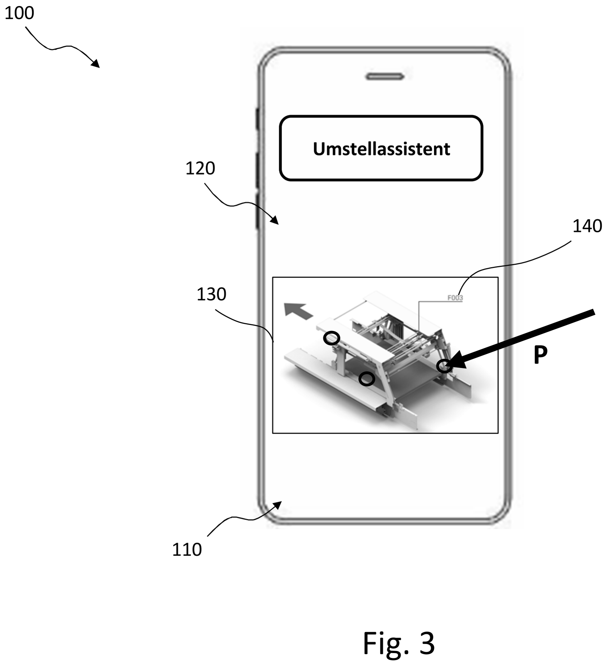

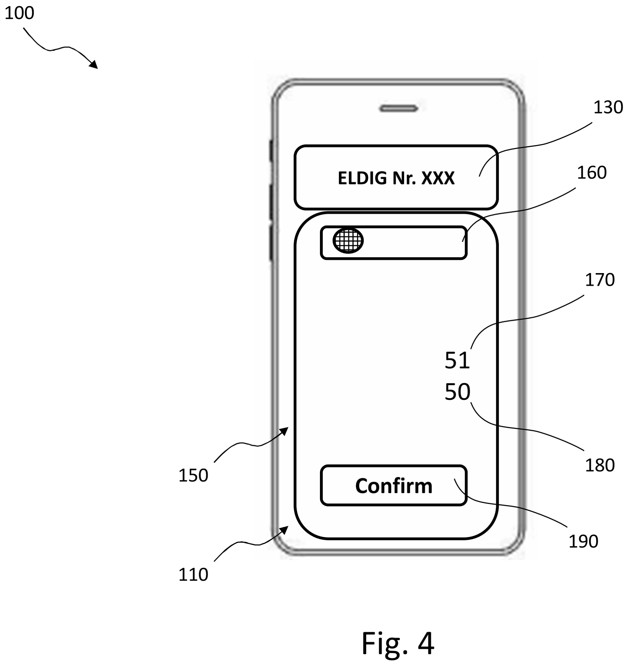

Die Vorrichtung weist vorteilhaft eine Datenschnittstelle zu einem Gerät, vorzugsweise einem in Fig. 3 und Fig. 4 ganz oder in Teilen beispielhaft dargestellten mobilen Gerät 100, beispielsweise einem mobilen Telekommunikations-Endgerät, mit einer Anzeige, vorzugsweise einer Bildschirmdarstellung 110 auf. Eine solche Anzeige kann beispielsweise Reihenfolge und Verstellweg insbesondere einer manuell vorzunehmenden Verstellung für mindestens ein verstellbares Element angeben.

Die Vorrichtung ist hiernach insbesondere frei von einer vorrichtungsgebundenen Displayanzeige. Vorteilhaft schließt dies jedoch vorrichtungsungebundene Anzeigen, insbesondere Bildschirmdarstellungen 110 vorzugsweise auf einem mobilen Gerät nicht aus.

Die Datenschnittstelle kann Teil eines beispielsweise drahtlosen Netzwerks sein. Ein solches kann vorrichtungsspezifisch, anlagenspezifisch, standortspezifisch oder firmenweit sein.

Das verstellbare Element beziehungsweise ein durch Verstellung desselben vorzunehmender Verstellvorgang kann:
- eine Gassenbreitenverstellung, und/oder
- eine Transportspurenpositionsverstellung, und/oder
- eine Schrumpftunnelschachtwandverstellung, und/oder
- eine Lufttransportbreitenverstellung
umfassen oder hiervon umfasst sein beziehungsweise Teil einer solchen sein.

Das verstellbare Element kann ganz oder teilweise:
- ein Gassenblech, und/oder
- eine Schrumpftunnelschachtwand, und/oder
- eine Schließkette eines Verpackungsmoduls, und/oder
- eine Spur einer Gebindevorfaltung, und/oder
- ein Geländer zum Karton-Falten, und/oder
- einen Preformzulauf in eine Blasmaschine
umfassen.

Vorteilhaft ist die das verstellbare Element umfassende Vorrichtung Teil einer Verpackungsmaschine. Beispielsweise kann die Vorrichtung insbesondere im Zulauf einer Verpackungsmaschine angeordnet sein.

Generell kann die Vorrichtung Teil einer Getränke- und/oder Behälterbehandlungsanlage sein. Sie kann an mehreren Positionen innerhalb einer entsprechenden Anlage verwirklicht sein, überall dort, wo eine artikelabhängige Verstellung vorgenommen werden muss. Dies kann auch Stationen innerhalb einer solchen Anlage umfassen, bei denen ein gleichzeitiger Umgang mit mehren, beispielsweise gruppierten Artikeln stattfindet.

Beispielsweise kann die Vorrichtung zum Umgang mit Artikeln mit mindestens einem verstellbaren Element eine Gruppierstation und/oder einen Greiferkopf umfassen. Beispielsweise kann eine Transportstrecke der Vorrichtung zum Umgang mit Artikeln mit mindestens einem verstellbaren Element eine Gruppierstation und/oder einen Greiferkopf umfassen.

Beispielsweise kann das verstellbare Element eine Greiftulpe oder eine Gruppe von Greiftulpen eines Greiferkopfs umfassen.

Eine vorteilhafte Ausgestaltung der Erfindung sieht vor, dass gegebenenfalls für noch zu verstellende verstellbare Elemente kennzeichnende Leuchtanzeigen vorgesehen sind.

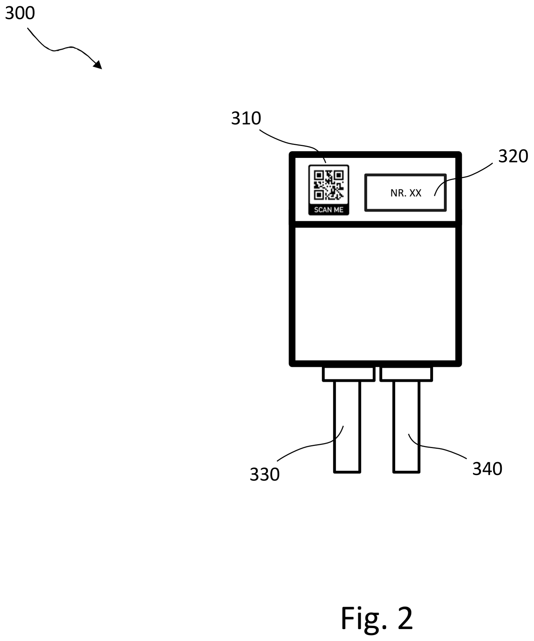

Die schematische Ansicht Fig. 2 zeigt eine digitale Positionserfassungseinheit 300 für ein verstellbares Element einer erfindungsgemäßen Vorrichtung zum Umgang mit Artikeln. Die Positionserfassungseinheit 300 kann einen oder mehrere kurz auch als Positionssensoren bezeichenbare Sensoren zur Positionserfassung eines verstellbaren Elements oder eines Teils eines verstellbaren Elements umfassen. Alternativ kann die Positionserfassungseinheit 300 mit den erwähnten Positionssensoren eines oder mehrerer verstellbarer Elemente verbunden oder zumindest verbindbar sein, beispielsweise durch Einrichtung und/oder Beitritt und/oder Öffnen eines Netzwerks, wie etwa eines drahtlosen Netzwerks. Über ein Datenkabel 330 kann die Positionserfassungseinheit 300 mit der Vorrichtung, insbesondere mit einer Steuereinrichtung, wie etwa einer SPS, beispielsweise einem Steuergerät der Vorrichtung und/oder der Station und/oder der Anlage und/oder der Produktionsstätte zum Zweck des Zugriffs beispielsweise auf zu erwartende neue Artikel und/oder der Werte von in der Vorrichtung verbauter Positionssensoren verbunden sein. Ein Stromkabel 340 dient der Stromversorgung der Positionserfassungseinheit 300.

Auf der Positionserfassungseinheit 300 kann ein maschinenlesbarer Code 310, hier beispielhaft durch einen QR-Code repräsentiert, angeordnet sein. Alternativ oder zusätzlich kann ein alphanumerischer Code 320 beispielsweise in Form einer Anlagennummer, Stationsnummer, o. dgl. auf der Positionserfassungseinheit 300 angeordnet sein. Der numerische Code 320 beispielsweise dient einer genauen Identifizierung der Positionserfassungseinheit 300 sowie damit einhergehend eines Standorts eines Bedieners an der Vorrichtung, beispielsweise wenn dieser Code 320 durch den Bediener sichtbar ist.

Wichtig ist hervorzuheben, dass entsprechende Codes 310, 320 auch an einer anderen Stelle der Vorrichtung, als auf der Positionserfassungseinheit 300 angeordnet sein können, um das nachfolgend noch beschriebene zu erzielen.

Die Positionserfassungseinheit 300 weist vorteilhaft mindestens ein eindeutig einer momentanen Position oder momentanen Einstellung eines oder mehrerer verstellbaren Elemente zuordbares und in Abhängigkeit von der momentanen Position oder momentanen Einstellung veränderliches digitales Ausgangssignal auf oder ist zumindest in der Lage, ein solches bereitzustellen.

Eine voranstehend bereits und nachfolgend noch beschriebene Vorrichtung zum Umgang mit Artikeln, insbesondere einer Getränke- und/oder Behälterbehandlungsanlage, mit mindestens einem verstellbaren Element welches mit einer digitalen Positionserfassungseinheit ausgestattet ist, und welche vorteilhaft frei von einer Displayanzeige ausgeführt sein kann, erlaubt die Durchführung eines Verfahrens zum Betrieb einer solchen Vorrichtung, welches Verfahren sich dadurch auszeichnet, dass zur Anpassung der Vorrichtung an den Umgang mit von bisherigen Artikeln verschiedenen Artikeln ein Gerät, insbesondere ein mobiles Gerät über ein bevorzugt zumindest teilweise drahtloses Netzwerk mit der Vorrichtung gekoppelt und dessen Anzeige zur Ausgabe zumindest von bei einem Artikelwechsel vorzunehmender Einstellungen des mindestens einen verstellbaren Elements genutzt wird.

Das Verfahren kann beispielsweise vorsehen, dass beispielsweise Messwerte der mindestens einen Positionserfassungseinheit auf ein Gerät, insbesondere ein mobiles Gerät, besonders bevorzugt drahtlos übertragen werden. Auf dem vorrichtungsunabhängigen Gerät können bei einem Artikelwechsel vorzunehmende Verstellvorgänge und/oder -hinweise betreffend das mindestens eine verstellbare Element ausgegeben werden.

Mit anderen Worten kann durch das Verfahren gestützt durch Vornahme einer kurz als Einstellungsänderung bezeichneten Änderung mindestens einer Einstellung mindestens eines verstellbaren Elements eine Anpassung der Vorrichtung von einem Umgang mit alten Artikeln an einen Umgang mit neuen Artikel erfolgen.

Das Verfahren kann eine Verbindung insbesondere eines mobilen Geräts mit einem die Vorrichtung, zumindest jedoch die digitale Positionserfassungseinheit des mindestens einen verstellbaren Elements umfassenden Netzwerk durch Eingabe eines Codes, beispielsweise eines maschinenlesbaren Codes 310 vorsehen, woraufhin das mobile Gerät beispielsweise bei einem Artikelwechsel vorzunehmende Verstellungen des verstellbaren Elements angibt, beispielsweise anzeigt.

Vorteilhafte Ausgestaltungen eines solchen Verfahrens können das nachfolgend Beschriebene ganz oder teilweise umfassen.

Die Vorrichtung zum Umgang mit Artikeln mit mindestens einem verstellbaren Element weist vorteilhaft eine Datenschnittstelle zu einem Gerät, vorzugsweise einem in Fig. 3 und Fig. 4 ganz oder in Teilen beispielhaft dargestellten mobilen Gerät 100 mit einer Anzeige, vorzugsweise einer Bildschirmdarstellung 110 auf. Dabei kann es sich beispielsweise um ein mobiles Telekommunikations-Endgerät handeln.

Durch Eingabe, vorteilhaft durch scannen des maschinenlesbaren Codes 310 beispielsweise mittels des mobilen Geräts 100, kann auf dem mobilen Gerät 100 eine auch als Umstellassistent bezeichenbare Bildschirmdarstellung aufgerufen werden. Hierbei kann zunächst eine in Fig. 3 beispielhaft gezeigte Startbildschirmanzeige 120 in Erscheinung treten.

Vorteilhaft tritt das mobile Gerät 100 durch Eingabe des maschinenlesbaren Codes 310 beispielsweise zeitgleich mit der Darstellung der Startbildschirmanzeige 120 einem vorteilhaft zugleich die erwähnte Datenschnittstelle bereitstellenden Netzwerk bei. Dabei kann es sich eigens um ein von der Positionserfassungseinheit 300 ausgehendes drahtloses Netzwerk handeln. Grundsätzlich ist durch Eingabe des maschinenlesbaren Codes 310 der Beitritt zu einem anderen vorgegebenen Netzwerk, beispielsweise einem produktionsstättenweiten Netzwerk denkbar.

Die Startbildschirmanzeige 120 kann eine beispielsweise schematische, grafische Darstellung 130 eines Teils der Vorrichtung zum Umgang mit Artikeln, insbesondere eine grafische Darstellung 130 eines mindestens ein verstellbares Element umfassenden Teils der Vorrichtung zum Umgang mit Artikeln zeigen. Vorteilhaft handelt es sich bei der grafischen Darstellung 130 um eine perspektivische Darstellung in einer Ansicht aus Sicht des Bedieners gesehen, wenn dieser auf den die Anordnung des maschinenlesbaren Codes 310 und vorteilhaft auch des alphanumerischen Codes 320, beispielsweise die Positionserfassungseinheit 300 umfassenden Teil der Vorrichtung blickt. Außerdem kann der alphanumerische Code 320 auf der Startbildschirmanzeige 120, beispielsweise innerhalb der grafischen Darstellung 130 angezeigt sein. Dadurch kann ein Bediener, der sich des mobilen Geräts 100 bedient, die jeweilige Positionserfassungseinheit 300 verifizieren und damit auch seinen Standort in Bezug auf die Vorrichtung eindeutig identifizieren.

Die grafische Darstellung 130 innerhalb der Startbildschirmanzeige 120 kann die manuelle Auswahl eines von mehreren verstellbaren Elementen erlauben oder eine Auswahl vorgeben. Die manuelle Auswahl eines verstellbaren Elements kann durch antippen beispielsweise eines die grafische Darstellung 130 zeigenden, berührungsempfindlichen Bildschirms des mobilen Geräts 100 erfolgen. Die Vorgabe einer Auswahl kann durch farbliche oder optische Hervorhebung, beispielsweise durch eine animierte Vergrößerungsdarstellung einhergehend mit einer Bestätigung durch den Benutzer, beispielsweise durch antippen beispielsweise eines die grafische Darstellung 130 zeigenden, berührungsempfindlichen Bildschirms des mobilen Geräts 100 erfolgen.

Zum ausgewählten verstellbaren Element kann darüber hinaus ein genau dem einen ausgewählten verstellbaren Element zugeordneter alphanumerischer Code 140 auf der Startbildschirmanzeige 120 wiedergegeben sein, wie in Fig. 3 für das durch einen Kreis in der grafischen Darstellung 130 hervorgehobene verstellbare Element, auf welches der Pfeil P weist.

Durch das Treffen einer Auswahl des entsprechenden verstellbaren Elements mit dem diesem zugeordneten alphanumerischen Code 140 in der grafischen Darstellung 130 wechselt die Bildschirmdarstellung 110 von der Startbildschirmanzeige 120 in Fig. 3 zu einer in Fig. 4 gezeigten Einstellungsbildschirmanzeige 150 des auf dem mobilen Gerät 100 aufrufbaren Umstellassistenten für das dem alphanumerischen Code 140 zugeordnete verstellbare Element der Vorrichtung zum Umgang mit Artikeln beziehungsweise für einen dem alphanumerischen Code 140 zugeordneten Teil eines verstellbaren Elements der Vorrichtung zum Umgang mit Artikeln.

Dieser alphanumerischen Code 140 kann in der Einstellungsbildschirmanzeige 150 beispielsweise hervorgehoben dargestellt sein, um dem Bediener die Verifikation des von der der vorzunehmenden Einstellung betroffenen verstellbaren Elements beziehungsweise des von der der vorzunehmenden Einstellung betroffenen Teils eines verstellbaren Elements zu erlauben.

Die Einstellungsbildschirmanzeige 150 kann eine Verifizierungsanzeige 160 einer korrekten Auswahl des ausgewählten verstellbaren Elements oder eines Teils des selben umfassen. Die Verifizierungsanzeige 160 kann beispielsweise gelb leuchten, wenn das ausgewählte verstellbare Element an der Reihe ist oder sein kann, nunmehr verstellt zu werden. Die Verifizierungsanzeige 160 kann rot leuchten, wenn das ausgewählte verstellbare Element nicht an der Reihe ist oder sein kann, nunmehr verstellt zu werden, beispielsweise weil zuvor noch andere verstellbare Elemente verstellt werden müssen. Die Verifizierungsanzeige 160 kann grün leuchten, wenn das ausgewählte verstellbare Element korrekt eingestellt ist und nicht verstellt werden muss.

Die Einstellungsbildschirmanzeige 150 kann eine Anzeige 170 von der Positionserfassungseinheit 300 bereitgestellter IST-Werte der momentanen Position des ausgewählten verstellbaren Elements oder eines Teils des selben umfassen.

Die Einstellungsbildschirmanzeige 150 kann eine Anzeige 180 von der Positionserfassungseinheit 300 bereitgestellter SOLL-Werte der momentanen Position des ausgewählten verstellbaren Elements oder eines Teils des selben umfassen.

Die Einstellungsbildschirmanzeige 150 kann eine Bestätigungsschaltfläche 190 umfassen, die beispielsweise zu Zwecken einer Protokollierung beispielsweise durch antippen betätigt werden muss, um einen artikelabhängigen Ein- oder Verstellvorgang eines verstellbaren Elements oder eines Teils eines verstellbaren Elements abzuschließen.

Eine bevorzugte Anwendung findet die Erfindung in Verbindung mit einem so genannten Packer, bei dem mehrere beispielsweise gleichartige Artikel beispielsweise:
- zu palettierbaren Artikellagen gruppiert,
- mit oder ohne eine Umverpackung zu Gebinden zusammengestellt,
- zur einzelnen oder gruppenweisen Einsortierung in Kästen angeordnet und/oder ausgerichtet
werden, sowie auch ganz allgemein in der Getränketechnik.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Transportstrecke
2 Artikel
3 verstellbares Element
4 verstellbares Element
5, 5a Verstellvorrichtung
6, 6a Verstellglied
7, 7a Betätigungseinrichtung
8 Kupplung
9 motorischer Antrieb
10 Displayanzeige
11 zentrale Steuereinheit
12 Bildschirm
13 Tastatur
100 mobiles Gerät
110 Bildschirmdarstellung
120 Startbildschirmanzeige
130 grafische Darstellung
140 alphanumerischer Code
150 Einstellungsbildschirmanzeige
160 Verifizierungsanzeige
170 Anzeige IST-Wert
180 Anzeige SOLL-Wert
190 Bestätigungsschaltfläche
300 Positionserfassungseinheit
310 maschinenlesbarer Code
320 alphanumerischer Code
330 Datenkabel
340 Stromkabel
A Pfeil
B Doppelpfeil
P Pfeil

## Patentansprüche

1. . Vorrichtung zum Umgang mit Artikeln (2), insbesondere Getränke- und/oder Behälterbehandlungsanlage, mit mindestens einem verstellbaren Element (3, 4) welches mit einer digitalen Positionserfassungseinheit (300) ausgestattet ist, **dadurch gekennzeichnet, dass** die Vorrichtung oder die mindestens eine digitale Positionserfassungseinheit (300) frei von einer Displayanzeige ist.

2. . Vorrichtung nach Anspruch 1, welche eine Datenschnittstelle zu einem Gerät (100), vorzugsweise einem mobilen Gerät (100) mit einer Anzeige, vorzugsweise einer Bildschirmdarstellung (100) aufweist.

3. . Vorrichtung nach Anspruch 1 oder 2, wobei das verstellbare Element (3, 4):
- eine Gassenbreitenverstellung, und/oder
- eine Transportspurenpositionsverstellung, und/oder
- eine Schrumpftunnelschachtwandverstellung, und/oder
- Lufttransportbreitenverstellung
umfasst oder hiervon umfasst ist.

4. . Vorrichtung nach Anspruch 1, 2 oder 3, wobei das verstellbare Element (3, 4) ganz oder teilweise:
- ein Gassenblech, und/oder
- eine Schrumpftunnelschachtwand, und/oder
- eine Schließkette eines Verpackungsmoduls, und/oder
- eine Spur einer Gebindevorfaltung, und/oder
- ein Geländer zum Karton-Falten, und/oder
- einen Preformzulauf in eine Blasmaschine
umfasst.

5. . Vorrichtung nach einem der Ansprüche 1 bis 4, wobei das verstellbare Element (3, 4) Teil einer Verpackungsmaschine, insbesondere im Zulauf einer Verpackungsmaschine angeordnet ist.

6. . Vorrichtung nach einem der Ansprüche 1 bis 5, wobei die Transportstrecke eine Gruppierstation und/oder einen Greiferkopf umfasst.

7. . Vorrichtung nach Anspruch 6, wobei das verstellbare Element (3, 4) eine Greiftulpe oder eine Gruppe von Greiftulpen eines Greiferkopfs umfasst.

8. . Vorrichtung nach einem der voranstehenden Ansprüche, wobei die manuelle Verstelleinrichtung (5, 5a) eine Handkurbel und/oder einen Klemmhebel umfasst.

9. . Vorrichtung nach einem der voranstehenden Ansprüche, wobei die Vorrichtung eine Transportstrecke (1) umfasst, entlang der mit Artikeln (2) umgegangen wird, und das verstellbare Element (3, 4) entlang der Transportstrecke (1) angeordnet ist.

10. . Vorrichtung nach Anspruch 9, wobei mindestens ein verstellbares Element (3, 4) mit den Artikeln (2) während deren Transports zusammenwirkt, indem die Artikel (2) mit dem Element (3, 4) in Kontakt kommen und aufgrund der Transportbewegung während dieser einen von der Transportbewegung verschiedenen, abweichenden Umgang, insbesondere eine Verschiebung, Verdrehung, Verkippung erfahren.

11. . Vorrichtung nach einem der voranstehenden Ansprüche, wobei mindestens eine manuelle Verstelleinrichtung (5, 5a) für ein verstellbares Element (3, 4) vorgesehen ist.

12. . Vorrichtung nach einem der voranstehenden Ansprüche, wobei sie frei von einer Displayanzeige mit einer Bildschirmdarstellung (110) von bei einem Artikelwechsel vorzunehmender Verstellvorgänge und/oder -hinweise ist.

13. . Vorrichtung nach einem der voranstehenden Ansprüche, wobei die Positionserfassungseinheit (300) mindestens einen Positionssensor für wenigsten ein verstellbares Element (3, 4) umfasst.

14. . Vorrichtung nach einem der voranstehenden Ansprüche, wobei zu verstellende verstellbare Elemente (3, 4) kennzeichnende Leuchtanzeigen vorgesehen sind.

15. . Verfahren zum Betrieb einer Vorrichtung zum Umgang mit Artikeln (2) nach einem der voranstehenden Ansprüche, **dadurch gekennzeichnet, dass** zur Anpassung der Vorrichtung an den Umgang mit von bisherigen Artikeln (2) verschiedenen Artikeln (2) ein Gerät über ein Netzwerk mit der Vorrichtung gekoppelt und dessen Anzeige zur Ausgabe zumindest von bei einem Artikelwechsel vorzunehmender Einstellungen des mindestens einen verstellbaren Elements (3, 4) genutzt wird.
